# EUROPÄISCHE PATENTSCHRIFT

(11) **EP 0 991 292 B1**
(45) Veröffentlichungstag und Bekanntmachung des Hinweises auf die Patenterteilung: **14.11.2007**
(21) Anmeldenummer: 99119289.9
(22) Anmeldetag: 28.09.1999
(51) Int. Cl.: H04Q 11/04

(54) **Programmgesteurtes Kommunikationssystem zur Vermittlung von daran angeschlossenen analogen und digitalen Kommunikationsendgeräten**
Program controlled communication system for switching of analog and digital communication terminals connected thereto
Système de communication commandé par programme pour la commutation des terminaux de communication analogiques et numériques connectés

(30) Priorität: 29.09.1998 DE 19844672
(43) Veröffentlichungstag der Anmeldung: 05.04.2000
(73) Patentinhaber: SIEMENS AKTIENGESELLSCHAFT, 80333 München (DE)
(72) Erfinder: Dziennus, Norbert, 44227 Dortmund (DE); Fink, Gunter, 58239 Schwerte (DE); Böttger, Detlev, 58239 Schwerte (DE)

(56) Entgegenhaltungen:
- EP-A- 0 454 421
- DE-A1- 4 332 076

## Beschreibung

Kommunikationssysteme dienen zur Verbindung von Endgeräten untereinander und zur Verbindung solcher Endgeräte mit an andere Kommunikationsnetze, z. B. öffentliche Netze angeschlossenen Endgeräten. Neben den einem Verbindungsaufbau und Verbindungsabbau zwischen Kommunikationsendgeräten zuzuordnenden Prozedurabläufen in einem solchen Kommunikationssystem werden auch weitere Prozedurabläufe, beispielsweise die Inanspruchnahme von Teilnehmerleistungsmerkmalen und Diensten gesteuert. Die Inanspruchnahme von Leistungsmerkmalen ist auch von der Art und dem Funktionsumfang der verwendeten Endgeräte abhängig. So gilt beispielsweise für Fernsprechendgeräte, dass digitale Fernsprechendgeräte gegenüber analogen Fernsprechendgeräten - die über entsprechende Schnittstellen ebenfalls an digitale programmgesteuerte Kommunikationssysteme anschließbar sind - zusätzliche Leistungsmerkmale bieten können. Bei digitalen Endgeräten werden die zu übermittelnden Informationen, wie beispielsweise u. a. die vom Teilnehmer eingegebenen Wahlinformationen als D-Kanalprotokoll vermittelt. Bei analogen Endgeräten erfolgt im Zusammenhang mit dem hierfür z. B. angewendeten sogenannten Tastwahlverfahren die Übermittlung der Wahlinformationen in Form von Mehrfrequenz-Codezeichen. Zur Auswertung dieser Zeichen sind im Kommunikationssystem Codeempfänger vorhanden, die als Teil von zentralen Baugruppen aus Gründen der Wirtschaftlichkeit und der Optimierung der vorhandenen Hardware nur in geringer Anzahl vorgesehen sind. Für die Zeichenübermittlung zu anderen Vermittlungseinrichtungen, z. B. öffentlichen Vermittlungssystemen sind einige wenige Mehrfrequenz-Codesender vorgesehen. Diese sind auch erforderlich für die Umsetzung einer im Impulsverfahren abgegebenen Wahlinformation.

In den Fällen, in denen an das Kommunikationssystem, das insbesondere ein privates Kommunikationssystem darstellt, eine Vielzahl von analogen Endgeräten angeschlossen sind, kann im Hinblick auf die notwendigen Codeempfänger bzw. Codesender ein Ressourcen-Engpass entstehen. Das bedeutet, dass dann z. B. die Möglichkeit eines Verbindungsaufbaus eingeschränkt bzw. nicht möglich ist.

Aus DE 43 32 076 A1 (Siemens AG) ist auch ein Kommunikationssystem der obengenannten Art bekannt, bei dem für den Fall, daß kein Codeempfänger frei ist, ein ankommender Anruf an eine Abfragestelle weitergeleitet wird.

Es ist die Aufgabe der Erfindung - im Hinblick auf den Einsatz einer Vielzahl von analogen Endgeräten - die Betriebsweise diesbezüglich zu verbessern.

Diese Aufgabe wird ausgehend von dem im Oberbegriff des Patentanspruchs 1 angegebenen Merkmalen durch dessen kennzeichnende Merkmale gelöst. Das Wesentliche der Erfindung besteht darin, dass in der Regel an mehreren Anschlussports des Systems jeweils eine externe Einrichtung angeschlossen ist, die einen Codeempfänger und einen Codesender aufweist. In den Fällen, in denen auf entsprechende Anforderung hin kein systeminterner Codeempfänger bzw. Codesender aktuell zur Verfügung steht, werden statt dessen der Codeempfänger bzw. Codesender dieser externen Einrichtung für Funktionsabläufe herangezogen, die mit denen der internen Empfänger/Sender übereinstimmen. Hierzu wird im Bedarfsfall durch die Systemsteuerung die Verbindung zu dieser jeweiligen externen Einrichtung hergestellt. Über die betreffende Anschlussleitung sind je nach der aktuellen Situation die diesbezüglich notwendigen Signalisierungs- bzw. Anreizinformationen protokollgerecht zwischen dem System und der externen Einrichtung übermittelbar.

Es ergeben sich dadurch zusätzliche Freiheitsgrade hinsichtlich der Anzahl der zur Verfügung stehenden Codeempfänger/Codesender, ohne dass systemintern eine hardwaremäßige Erweiterung erforderlich ist. Es ist nur zentral im System eine softwaremäßige Anpassung vorzunehmen. Es ist auch keine Modifizierung der vom System hierfür gebotenen Schnittstelle notwendig. Es ergibt sich dadurch eine wirtschaftlich vertretbare Lösung, da kein hardwaremäßiger Ausbau vorgesehen werden muss, der auf eine mögliche maximale Anzahl von abzuschließenden analogen Endgeräten von vornherein abgestimmt ist. Die dazugehörige funktionale Logik wird im System abgewickelt.

Erfindungsgemäß wird als externe Einrichtung ein über eine digitale Schnittstelle angeschlossenes handelsübliches digitales Endgerät verwendet, das mit einer dazu handelsüblich vorhandenen Adaptereinheit gekoppelt ist. Im Zusammenhang mit der für diese gekoppelten Geräte normalerweise vorgesehen Funktionalität enthält das Endgerät einen Codesender und die Adaptereinheit einen Codeempfänger. Für das handelsübliche Endgerät ist also von vornherein eine Schnittstelle zu einem steckbaren Zusatzgerät in Form eines solchen Endgeräteadapters vorhanden. Um sicherzustellen, dass im Bedarfsfalle auch die notwendige Verbindung zu diesen Geräten möglich ist, kann vorgesehen sein, dass diese Geräte für die ihnen normaler Weise zugeordnete Funktion nicht zur Verfügung stehen. Sie sind dann nicht als teilnehmerbezogene Endgeräte im System programmiert, sondern dienen lediglich ausschließlich zur Erweiterung der Anzahl der Codeempfänger bzw. Codesender. Ihre gesamte Anzahl wird bedarfsmäßig auf die jeweilige Mehr- bzw. Vielzahl der angeschlossenen analogen Endgeräte abgestimmt.

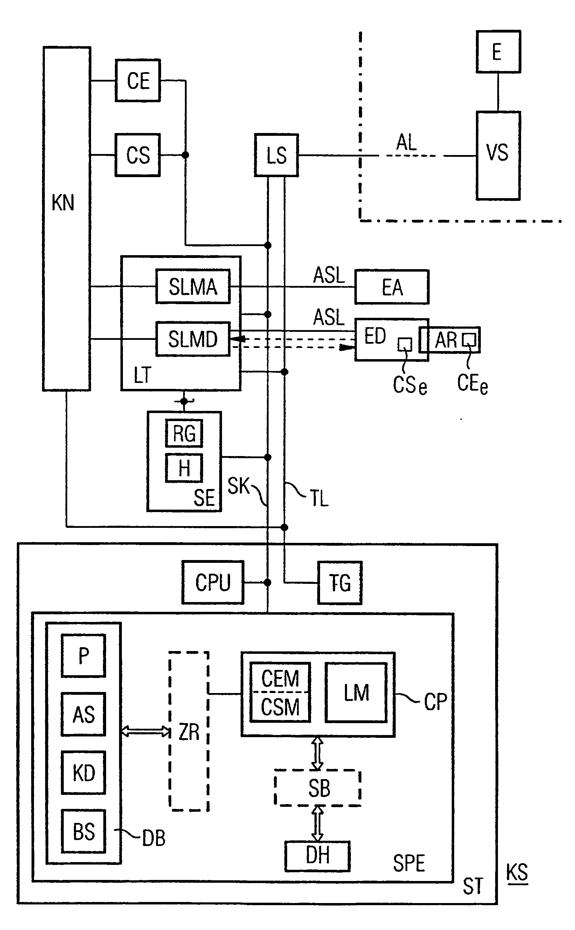

Weitere Vorteile und Merkmale der Erfindung ergeben sich aus der nachfolgenden Beschreibung eines Ausführungsbeispiels im Zusammenhang mit der Zeichnung. In der Zeichnung (Figur) ist die grundsätzliche Blockdarstellung eines Kommunikationssystem mit der angedeuteten Basisstruktur der Steuerung für ein solches System veranschaulicht. Zentraler Bestandteil des in der Figur dargestellten privaten Kommunikationssystems KS ist ein Koppelnetz KN, über das Endgeräte, von denen lediglich analoge Fernsprechendgeräte EA und digitale Fernsprechendgeräte ED schematisch angedeutet sind - miteinander bzw. mit zu einem öffentlichen Vermittlungssystem VS führenden Leitung AL verbindbar sind. Für den Verbindungsaufbau zwischen den Endgeräten sind in dem Kommunikationssystem Verbindungsaufbauverfahren implementiert. Initialisiert werden derartige Verbindungsaufbauverfahren durch eine Wahlprozedur, die in der Regel manuell durch den Teilnehmer gesteuert wird. Im Rahmen eines Verbindungsaufbaus stellt dann das die Wahlprozedur einleitende Endgerät das Ursprungskommunikationsendgerät und der durch die Wahlprozedur bestimmte Kommunikationsanschluss den Zielkommunikationanschluss dar.

Das zentrale Koppelnetz KN steht unter dem Steuereinfluss der zentralen Systemsteuerung ST, die neben dem zentralen Prozessor CPU eine Speichereinrichtung SPE und eine Takteinheit TG enthält. Der zentrale Prozessor CPU steuert sämtliche Vermittlungsvorgänge und besorgt eine Aufbereitung und Zuteilung der Steuerdaten. Im Kommunikationssystem sind Leitungsanschlusseinrichtungen, symbolisiert durch die Leitungsanschlusseinrichtung LT angeordnet. Diese enthalten grundsätzlich als Leitungsschnittstelle Teilnehmeranschlussmodule SLM, die über die Teilnehmeranschlussleitungen ASL jeweils mit den Kommunikationsendgeräten verbunden sind. Es können prinzipiell zwei unterschiedliche Teilnehmeranschlussmodule vorgesehen sein, nämlich Anschlussmodule SLMA für den Anschluss analoger Kommunikationsendgeräte EA und Anschlussmodule SLMD für den Anschluss digitaler Kommunikationsendgeräte ED. Derartige Anschlussmodule sind jeweils für den Anschluss einer bestimmten Anzahl von Kommunikationsendgeräten vorgesehen. Die einzelnen Einheiten sind über einen Signalisierungskanal SK mit der Systemsteuerung verbunden. Über diesen Signalisierungskanal werden die Informationen z. B. mit Hilfe der bekannten HDLC-Übermittlungsprozedur ausgetauscht. Die durch die Systemsteuerung angebotenen Taktsignale der Takteinheit TG werden über eine Taktleitung TL entsprechend verteilt.

Der Zugriff zu der Amtsleitung AL erfolgt über die Schnittstelle LS. Diese Schnittstelle kann beispielsweise auch einen ISDN-Teil beinhalten, der z. B. als standardisierte SO-Schnittstelle ausgebildet sein kann. Die Peripherie des Kommunikationssystems wird ergänzt durch eine Signalisierungseinheit SE, die unter anderem zu seiner Zeichenversorgung vorhanden ist. In dieser Einheit ist z. B. neben dem für die Erzeugung der Hörtöne vorgesehene Modul ein weiteres Modul RG enthalten, das die für eine Rufsignalisierung notwendigen Rufwechselspannungen liefert, diese Rufsignalisierung wird den jeweiligen Leitungsanschlusseinrichtungen zugeführt.

Der zentrale Prozessor CPU der Systemsteuerung ST hat Zugriff zu den in der Speichereinrichtung SPE abgelegten Informationen. Diese Speichereinrichtung enthält eine Datenbasis DB, in der im Speicherteil KD die Kundendaten, wie z. B. die den Endgeräten zugeteilten Berechtigungen und die Anlagenkonfiguration abgelegt sind. Die Datenbasis enthält auch das Betriebssystem BS, dass die für das Kommunikationssystem typische Vielzahl von gleichzeitig anfallenden und auch zu erledigenden Einzelaufgaben koordiniert. Seine wesentliche Aufgabe besteht darin, in Abhängigkeit von eingetroffenen oder innerhalb der Systemsteuerung intern gebildeten Anreizen dem zentralen Prozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul beispielsweise in dem Speicherteil P hinterlegt ist. Daten, die während eines durch ein Endgerät initiierten Verbindungsaufbaus aus der Datenbasis abgefragt werden, können zumindest teilweise in den Arbeitsspeicherbereich AS übernommen werden. Dieser Arbeitsspeicherbereich dient unter anderem der Aufnahme temporären Daten zur Programmablaufsteuerung. Grundsätzlich weist die in der Figur angedeutete Basisstruktur der Steuerung eines digitalen programmgesteuerten Kommunikationssystems einen modularen Charakter auf und es sind zumindest zwei hierarchische Ebenen der Programmsteuerung vorhanden. Eine von Ihnen dient mittels jeweils an eine bestimmte Endgeräteart angepassten Leitungsprogrammodulen DH zur Steuerung peripherer Geräte. Jedes dieser Programmodule DH bietet eine systemeinheitliche Schnittstelle zur Vermittlungstechnik-Strukturebene, die im vorliegenden Fall durch ein Vermittlungsprozedurprogrammodul CP repräsentiert ist. Der Informationsaustausch zwischen der Leitungstechnik-Strukturebene und der Vermittlungstechnik-Strukturebene erfolgt mittels definierter Meldungen, die beispielsweise über eine strichliert angedeutete Softwarebasisstruktur SB übertragen werden. Diese kann z. B. als integraler Bestandteil des Betriebssystems BS angesehen werden. Die Programmodule der beiden genannten Steuerungsebenen haben mittels Datenbasis-Zugriffsroutinen Zugang zur Datenbasis DB des gesamten Kommunikationssystems. Das Vorhandensein derartiger Zugriffsroutinen ist durch den strichliert angedeuteten Block ZR veranschaulicht.

Die Aufgaben des Vermittlungsprozedur-Programmoduls CP umfassen beispielsweise die für die Steuerung des Verbindungsaufbaus und des Verbindungsabbaus notwendigen Teilprozesse der gesamten Vermittlungsprozedur. So werden z. B. Berechtigungen geprüft und die Wahlbewertungsprozeduren durchgeführt. Es erfolgt auch eine Signalisierung von vermittlungstechnischen Zuständen zwischen den Endgeräten und es ist ein Aktivieren und ein Deaktivieren von Vermittlungstechnik-Leistungsmerkmalen aus den unterschiedlichen Vermittlungstechnischen Zuständen heraus durchführbar. Stellvertretend für die im Kommunikationssystem insgesamt vorgesehen Leistungsmerkmal - Programmodule ist das Modul LM angedeutet.

Von einem angeschlossenen analogen Endgerät EA werden bei einer Betätigung der Tasten der Wähltastatur im Zusammenhang mit den aufzubauenden internen oder externen Verbindungen, oder auch bei der gewünschten Beanspruchung von über Codeziffern möglichen Diensten oder Leistungsmerkmalen Mehrfrequenzcode-Zeichen - im Folgenden als DTMF-Zeichen bezeichnet - gebildet. Diese Zeichen werden an die entsprechenden Leitungen angelegt. Bei der Betätigung der Wähltasten wird eine Ziffer durch die Kombination von mindestens zwei im Hörtonbereich liegenden Frequenzen dargestellt. Die zwei aus einem gegebenen Frequenzvorrat verwendeten Frequenzen sind jeweils einer unteren und einer oberen Gruppe zugeordnet. Das eine bestimmte Ziffer repräsentierende Zeichen kann dann beispielsweise durch die Kombination einer Frequenz aus dieser unteren Gruppe und einer Frequenz aus der oberen Gruppe gebildet werden. Die jeweiligen DTMF-Zeichen werden einem Codeempfänger CE zugeführt und nach der Bestimmung des jeweiligen Ziffernwertes erfolgt eine sogenannte Wahlbewertung. Die betreffenden Ziffern können zur Inanspruchnahme eines Dienstes bzw. eines Leistungsmerkmales bzw. zur Anwahl eines internen oder auch eines externen Teilnehmers dienen, oder es könnte damit auch ein Voice-Mail-System, das an das Kommunikationssystem angeschlossen ist, gesteuert werden. Durch solche Informationen zum Voice-Mail-System wird dann beispielsweise definiert, für welchen Teilnehmer die betreffende Nachricht bestimmt ist. Im Zusammenhang mit der Abfrage einer in diesem Voice-Mail-System gespeicherten Nachricht und im Zusammenhang mit der Abgabe von Wahlinformationen für eine öffentliche Vermittlungseinrichtung, beispielsweise auch im Rahmen eines Least-Cost-Routing-Verfahrens, werden für die Aussendung derartiger Informationen Codesender CS eingesetzt. Die Anzahl dieser Codeempfänger CE sowie die Anzahl der Codesender CS, die systemintern vorhanden sind, ist begrenzt. Für ein sogenanntes mittleres Kommunikationssystem sind beispielsweise maximal 4 bis 6 Codeempfänger und zwei derartige Codesender vorgesehen. Sind nun an das Kommunikationssystem eine Vielzahl von analogen Endgeräten angeschlossen - in spezielle Fällen können aus kommerziellen Gründen, bis auf wenige Ausnahmen die vorhandenen Anschlussports durch derartige analoge Endgeräte beansprucht sein - so reicht die vorhandene Anzahl der Codeempfänger bzw. der Codesender, nicht mehr aus. Es können somit die an diese Empfänger bzw. Sender geknüpften unterschiedlichsten Aufgaben nicht mehr in der gewünschten Weise erfüllt werden. Das heisst, dass entsprechende Teilnehmerwünsche zunächst nicht berücksichtigt werden können.

Um in Abhängigkeit von der Anzahl der vorhandenen analogen Endgeräte ohne hardwaremäßigen Änderungen im System die Anzahl der vorhandenen Codeempfänger/Codesender zu erhöhen, wird auf solche Empfänger bzw. Sender zurückgegriffen, die in einer peripheren Einrichtung vorhanden sind. Dadurch kann im Bedarfsfall durch entsprechende Ausnutzung dieser an das System angeschalteten peripheren Einrichtung die Anzahl der für das System zur Verfügung stehenden Codeempfänger bzw. Codesender erhöht werden. Eine solche periphere Einrichtung kann beispielsweise ein digitales Endgerät ED darstellen, das für die Abgabe von besonderen Steuerinformationen, wie beispielsweise für eine Nachwahl, für die Steuerung einer Voice-Mail oder eines Anrufbeantworters, einen Codesender enthält. Es kann also ein handelsübliches digitales Endgerät, das über eine digitale Leitung vermittels einer entsprechenden digitalen Teilnehmerschnittstelle mit dem System verbunden ist, Verwendung finden. Über diese Leitung werden die Informationen der beiden Nachrichtenkanäle (B-Kanäle) und des Signalisierungskanals (D-Kanal) übermittelt. In diesem Signalisierungskanal werden z. B. auch die Wahlinformationen in einem bestimmten zugrundeliegenden Protokoll übertragen (z. B. das sogenannte Cornet-TS-Protokoll des Endgerätes "Optiset" der Firma Siemens). Um die Anzahl, der an ein solches Kommunikationssystem KS anzuschließenden Geräte zu erweitern, besteht die Möglichkeit durch einen mit dem Endgerät ED zu koppelnden Adapter AR eine Schnittstelle für ein weiteres nachgeschaltetes Endgerät zu bieten. Je nach Ausführung dieses Adapters kann dieser für nachgeschaltete analoge oder für digitale Endgeräte verwendet werden. Als handelsübliche Einheit ist ein derartiger Adapter in der Weise ausgestaltet, dass er bei entsprechender Ausbildung des Endgerätes mit diesem zusammensteckbar ist. Derartige Zusatzgeräte, wie beispielsweise ein analoges Fernsprechendgerät oder ein Faxgerät können also jeweils ohne besondere Modifikation im Endgerät an dieses zusätzlich angeschlossen werden. Im Falle eines für ein analoges Endgerät bestimmten Adapters AR enthält dieser einen Codeempfänger CEe. Dieser dient dazu, die bei der üblichen Betriebsweise von einem angeschalteten weiteren analogen Endgerät abgegebenen Tasteninformationen aufzunehmen und entsprechend zu bewerten. Diese betreffenden Informationen werden dann bezogen auf die ISDN-orientierte Schnittstelle als entsprechende Aufträge in Form des D-Kanal-Protokolls übermittelt. Mit Bezug auf das verwendete Schnittstellenprotokoll erfolgt dies unter Verwendung darauf abgestimmter Schnittstellen-Steuerprogramme.

Ein digitales Endgerät, z. B. das symbolisch für die anderen digitalen Endgeräte in der Figur angedeutete Endgerät ED ist beispielsweise systemseitig innerhalb der Anschlusseinheit SLMD über eine sogenannte Up-Schnittstelle angeschlossen, wobei dann das Endgerät mit einer gleichartigen Schnittstelle ausgestattet ist. Diese ermöglicht eine bidirektionale Informationsübermittlung. Mit Hilfe des Adapters AR besteht nun üblicherweise die Möglichkeit z. B. ein Faxgerät oder ein analoges Endgerät anzuschließen. Dieser Adapter enthält, wie bereits erläutert, einen Codeempfänger CEe. Das digitale Endgerät weist einen Codesender CSE auf.

In den Fällen, in denen von den insgesamt möglichen Anschlüssen die überwiegende Anzahl durch analoge Endgeräte belegt wird, besteht die Gefahr, dass die Anzahl der vorhandenen Codeempfänger bzw. Codesender des Systems nicht mehr ausreichend ist. In solchen Fällen wird dann durch das System auf die in dem angeschalteten digitalen Endgerät ED vorhandenen Codesender bzw. auf den im zugeordneten Adapter AR vorhandenen Codeempfänger zurückgegriffen. Zu diesem Zweck sind in der Regel mehrere derartige Gerätekombinationen angeschaltet. Ist also im Bedarfsfall kein Codeempfänger des Systems frei, so wird ein Weg zu einem der Adapter aufgebaut, die über das angeschaltete Endgerät erreichbar sind. Ist im System kein Codeempfänger mehr verfügbar, so wird demnach ein Koppelweg von der Einheit SLMA, an die das betreffende analoge Endgerät EA angeschaltet ist, über das Koppelnetz und über die Einheit SLMD zu dem betreffenden Endgerät ED und dem Adapter AR geschaltet. Dieser Adapter erkennt dann die vom betreffenden Bediener des Endgerätes EA übermittelten DTMF-Zeichen und gibt sie protokollgerecht an das System weiter. Im System findet dann die gleiche Abarbeitung dieser Zifferninformationen statt, als wenn diese Ziffer vom internen Codeempfänger CE aufgenommen worden wären. Es wird also das zur Steuerung der Codeempfänger und zur Bewertung der von ihnen abgegebenen Informationen vorhandene Programmmodul CEM aufgerufen. Durch dieses Programmodul ist das Steuerungsprogramm für die insgesamt vorhandenen Mehfrequenz-Codeempfänger, d. h. die systeminternen und die durch die externe Einrichtung angebotenen Codeempfänger realisiert. Es wird also durch die externe Anschaltung die Möglichkeit geboten so viele Codeempfänger zur Verfügung zu stellen, wie es im Hinblick auf die Anzahl der angeschalteten analogen Endgeräte zweckmäßig ist. Es kann damit der zu bestimmten Zeiten gegebene Ressourcen-Engpass und die damit verbundene Unmöglichkeit des Verbindungsaufbaus vermieden werden. Um dem System weitere Codeempfänger zur Verfügung zu stellen, ist demnach nicht von vornherein eine entsprechende systemseitige Erweiterung vorzusehen. Dadurch ergeben sich Kostenvorteile.

Sind im System in bestimmten Fällen keine Codesender mehr verfügbar, so wird der Codesender des angeschalteten Endgerätes, z. B. ED benutzt. Dazu wird der Koppelweg zwischen der Einheit SLMA und der Einheit SLMD geschaltet. Das Endgerät enthält dann über die im Protokoll vorgesehenen Meldung den Auftrag entsprechende DTMF-Zeichen zu senden. Im System findet dann eine ähnliche Abarbeitung statt, als wenn der interne Codesender dieses jeweilige Zeichen gesendet hätte. Es werden dadurch z. B. gewählte Wahlziffern in wahlziffernindividuelle mehrfrequente Tonsignale umgesetzt, die als Steuerinformationen für einen Verbindungsaufbau verwendet werden. Die im Zusammenhang mit dem Aussenden derartiger Codezeichen notwendigen Abläufen werden mit einem entsprechenden Programmodul CSM abgewickelt.

Es ist sinnvoll, die zum Zwecke der Erhöhung der Codeempfänger bzw. Codesender verwendeten Endgeräte inklusive Adapter nicht mehr für ihre ursprüngliche Funktionalität einzusetzen, sondern nur noch zu dem Zweck, die Anzahl der für das System zu benutzenden Codeempfänger bzw. Codesender zu erhöhen. Damit wird dann sichergestellt, dass diese Empfänger bzw. Sender in jedem Fall zur Verfügung stehen und nicht durch Aktivitäten am Endgerät bzw. durch Aktivititäten an dem Endgerät das am Adapter angeschlossen ist, blockiert sind.

## Patentansprüche

1. Programmgesteuertes Kommunikationssystem zur Vermittlung von angeschlossenen analogen und digitalen Kommunikationsendgeräten, das eine unter anderem die vermittlungstechnische Steuerung und Koordinierung durchführende Systemsteuerung (ST) aufweist, die aus einem Systemspeicher (SPE) zur Speicherung von Programmodulen und von Daten und wenigstens einem Systemprozessor (CPU) besteht, dem unter Einfluss eines Betriebssystems die Programmodule zur Ausführung zugewiesen werden, wobei für wahl- und/oder steuerungsorientierte Funktionen eine vorgegebene geringe Anzahl von Codeempfängern (CE) und Codesendern (CS) intern vorgesehen sind, die bezogen auf analoge Endgeräte dazu dienen, Mehrfrequenz-Codezeichen aufzunehmen bzw. über eine weiterführende Leitung auszusenden,
**dadurch gekennzeichnet,**
**dass** an mindestens einem Anschlussport eine externe Einrichtung angeschlossen ist, die einen Codeempfänger und einen Codesender aufweist, dass in den Fällen, in denen auf entsprechende Anforderung hin kein systeminterner Codeempfänger bzw. Codesender aktuell zur Verfügung steht, statt dessen der Codeempfänger bzw. Codesender der externen Einrichtung für die gleichartigen Funktionsabläufe herangezogen wird, und dass hierzu durch die Systemsteuerung die Verbindung zu dieser externen Einrichtung hergestellt wird, so dass je nach der aktuellen Situation über die betreffende Anschlussleitung die diesbezüglich notwendigen Signal- bzw. Anreizinformationen in beiden Richtungen protokollgerecht ziwschen dem System und der externen Einrichtung übermittelbar sind.

2. Programmgesteuertes Kommunikationssystem nach Anspruch 1,
**dadurch gekennzeichnet,**
**dass** die externe Einrichtung ein über eine digitale Schnittstelle angeschlossenes handelsübliches digitales Endgerät (ED) dargestellt, das einen Codesender (CSe) aufweist und das mit einer eine weitere Schnittstelle für den Anschluss eines nachgeordneten analogen Endgerätes bietendenden und einen Codeempfänger (CEe) aufweisenden Adaptereinheit (AR) zu einer funktionalen Einheit gekoppelt ist.

3. Programmgesteuertes Kommunikationsgerät nach Anspruch 2,
**dadurch gekennzeichnet,**
**dass** zur funktionalen Kopplung die Adaptereinheit auf das Endgerät aufsteckbar ist und wobei die für die ursprüngliche Funktion vorgesehene Verbindung zu einem nachgeordneten Endgerät unterbleibt.

4. Programmgesteuertes Kommunikationssystem nach Anspruch 3,
**dadurch gekennzeichnet,**
**dass** sowohl das digitale Endgerät, als auch die Adaptereinheit handelsübliche Einheiten darstellen.

5. Programmgesteuertes Kommunikationssystem nach Anspruch 1,
**dadurch gekennzeichnet,**
**dass** eine auf die Vielzahl der angeschlossenen analogen Endgeräte (EA) bedarfsmäßig abgestimmte Anzahl von externen Einrichtungen (ED, AR) angeschlossen ist.

## Claims

1. Program-controlled communication system for switching connected analogue and digital communication terminals, which has a system controller (ST) carrying out, among other things, the switching control and coordination and which consists of a system memory (SPE) for storing program modules and data and at least one system processor (CPU) to which the program modules are assigned for execution under the influence of an operating system, wherein a predetermined small number of code receivers (CE) and code transmitters (CS) are provided internally for dialling- and/or control-oriented functions, which, with respect to analogue terminals, are used for receiving, or sending out via an ongoing line, dual-tone multifrequency code signals,
**characterized**
**in that** at at least one access port, an external device is connected which has a code receiver and a code transmitter, that in the cases in which, following a corresponding request, no system-internal code receiver or code transmitter is currently available, the code receiver or code transmitter of the external device is used instead for the similar functional sequences and that, for this purpose, the system controller establishes the connection to this external device so that, depending on the current situation, the relevant necessary signal and alerting information can be transmitted in both directions in protocol-compatible manner between the system and the external device via the relevant subscriber line.

2. Program-controlled communication system according to Claim 1,
**characterized**
**in that** the external device represents a commercially available digital terminal (ED) connected via a digital interface, which has a code transmitter (CSe) and which is coupled to an adapter unit (AR), offering a further interface for connecting a subsequent analogue terminal and having a code receiver (CEe), to form a functional unit.

3. Program-controlled communication device according to Claim 2,
**characterized**
**in that** for the functional coupling, the adapter unit can be plugged onto the terminal and wherein the connection to a subsequent terminal provided for the original function is omitted.

4. Program-controlled communication system according to Claim 3,
**characterized**
**in that** both the digital terminal and the adapter unit represent commercially available units.

5. Program-controlled communication system according to Claim 1,
**characterized**
**in that** a number of external devices (ED, AR) matching the demand for the multiplicity of connected analogue terminals (EA) is connected.

## Revendications

1. Système de communication commandé par programme pour la commutation de terminaux de communication analogiques et numériques connectés, qui a une commande (ST) de système effectuant, entre autres, la commande et la coordination en technique de commutation, qui est constitué d'une mémoire (SPE) de système pour mémoriser des modules de programme et des données et d'au moins un processeur (CPU) de système auquel sont affectés sous l'influence d'un système de fonctionnement pour la réalisation les modules de programme, un petit nombre prescrit de récepteurs (CE) de code et d'émetteurs (CS) de code étant prévus en interne pour des fonctions orientées sélection et/ou commande, ces récepteurs et émetteurs rapportés aux terminaux analogiques servant à enregistrer des signes de code à fréquence multiple ou à émettre sur une ligne d'acheminement,
**caractérisé**
**en ce que** sur au moins un port de connexion est connecté un dispositif extérieur qui a un récepteur de code et un émetteur de code, en ce que, dans les cas dans lesquels sur invitation correspondante il n'existe pas de récepteur de code ou d'émetteur de code interne au système disponible instantanément, au lieu de cela on tire parti du récepteur de code ou de l'émetteur de code du dispositif extérieur pour les déroulements de fonctions de même type et en ce que, à cet effet, on ménage par la commande de système la liaison à ce dispositif extérieur, de sorte que, suivant la situation instantanée, il peut être transmis par la ligne de connexion concernée les informations de signal ou de lancement nécessaires à cet égard dans les deux sens conformément au protocole entre le système et le dispositif extérieur.

2. Système de communication commandé par programme suivant la revendication 1,
**caractérisé**
**en ce que** le dispositif extérieur représente un terminal (ED) numérique du commerce qui est connecté par une interface numérique, qui a un émetteur (CSe) de code et qui est couplé à une unité fonctionnelle par une unité (AR) d'adapteur ayant un récepteur (CEe) de code et offrant une autre interface pour la connexion d'un terminal analogique en aval.

3. Système de communication commandé par programme suivant la revendication 2,
**caractérisé**
**en ce que**, pour le couplage fonctionnel, l'unité d'adapteur peut être enfichée sur le terminal et dans lequel la liaison prévue pour la fonction d'origine vers un terminal en aval est supprimée.

4. Système de communication commandé par programme suivant la revendication 3,
**caractérisé**
**en ce que** tant le terminal numérique qu'également l'unité d'adapteur représentent des unités habituelles dans le commerce.

5. Système de communication commandé par programme suivant la revendication 1,
**caractérisé**
**en ce qu'**un nombre déterminé suivant le besoin de dispositifs (ED, AR) extérieurs est raccordé à la pluralité des terminaux (EA) analogiques connectés.
